# EUROPÄISCHE PATENTSCHRIFT

(11) **EP 0 695 245 B1**
(45) Veröffentlichungstag und Bekanntmachung des Hinweises auf die Patenterteilung: **15.09.1999**
(21) Anmeldenummer: 94911132.2
(22) Anmeldetag: 09.03.1994
(51) Int. Cl.: B60S 1/34

(54) **WISCHERANORDNUNG MIT ZUSÄTZLICH ZUR PENDELNDEN SCHWENKBEWEGUNG DREHBAREM WISCHERARM**
WIPER ARRANGEMENT WITH A ROTATABLE WIPER ARM IN ADDITION TO THE RECIPROCATING MOVEMENT
SYSTEME DE BALAYAGE POUR ESSUIE-GLACES, COMPORTANT UN BRAS D'ESSUIE-GLACE ROTATIF EN PLUS DU MOUVEMENT PIVOTANT PENDULAIRE

(30) Priorität: 27.03.1993 DE 4310041
(43) Veröffentlichungstag der Anmeldung: 07.02.1996
(73) Patentinhaber: ITT Automotive Europe GmbH, 60488 Frankfurt (DE)
(72) Erfinder: EDELE, Reinhard, 74321 Bietigheim-Bissingen (DE); SCHMID, Eckhardt, D-74336 Brackenheim (DE)
(74) Vertreter: Dreiss, Fuhlendorf, Steimle & Becker
(86) Internationale Anmeldenummer: EP9400720
(87) Internationale Veröffentlichungsnummer: WO9422696

(56) Entgegenhaltungen:
- EP-A- 0 021 914
- FR-A- 2 625 715

## Beschreibung

Die Erfindung betrifft eine Wischeranordnung mit einem Wischerarm, bei dem das Wischerblatt entsprechend der Krümmung der zu säubernden Scheibe in seiner Stellung zur Scheibe verstellbar ist. Die Notwendigkeit der Winkelverstellung des Wischerblattes tritt verstärkt dadurch auf, daß die Scheiben vermehrt gekrümmt ausgeführt werden, um den Luftwiderstandswert von Kraftfahrzeugen herabzusetzen. Zur Winkelverstellung des Wischerblattes sind eine ganze Reihe von Lösungen angegeben worden, in denen zum einen das Wischerblatt selbst gegenüber dem Wischerarm verstellt wird, zum anderen ein Endabschnitt des Wischerarms gegenüber dem verbleibenden Befestigungsabschnitt verdreht wird.

Aus der DE-A-3 900 525 (oder FR-A-2 625 715) ist es bekannt, eine Befestigung des Wischerarms an der Wischerwelle vorzusehen, die mit der Wischerwelle verschwenkt wird und damit auch eine Schwenkbewegung des restlichen Wischerarms herbeiführt. Zusätzlich ist der restliche Wischerarm in der Befestigung drehbar gelagert, wobei der restliche Wischerarm während seiner Schwenkbewegung durch eine entsprechende Kulissenfuhrung gedreht wird. Nachteilig bei dieser Anordnung ist es, daß auf diese Weise der der Wischerwelle zugeordnete Abschnitt des Wischerarms in zwei gegeneinander bewegliche Teile aufgespaltet ist, was zu einem erhöhten Aufwand führt. Außerdem erlaubt die bekannte Konstruktion hinsichtlich der Drehbewegung des Wischerarms nur vergleichsweise kurze Krafthebel.

Aus diesen Druckschriften ist eine Wischeranordnung bekannt, bei der die pendelnde Schwenkbewegung des Wischerarms um die Achse der Wischerwelle durch eine zusätzliche pendelnde Drehbewegung des Wischerarms um seine eigene Längsachse überlagert ist. Der Wischerarm ist an einem Steuerteil befestigt, welches vermittels eines weiteren, an der Wischerwelle befestigten Bauteiles um die Achse der Wischerwelle geschwenkt wird und dabei gleichzeitig durch Abfahren einer Steuerkurve um die Längsachse des Wischerarmes pendelnd verdreht wird. Nachteilig an dieser Lösung ist, daß die Lagerstellen des Steuerteiles sehr hohen Belastungen ausgesetzt sind, da ausschließlich über die Lagerstellen alle Kräfte in den Wischerarm eingeleitet werden bzw. diese Lagerstellen alle Gegenkräfte des Wischarmes aufnehmen müssen. Außerdem ist zur Herstellung dieser Wischeranordnung ein recht großer Montageaufwand erforderlich.

Die Erfindung geht daher aus von einer Wischeranordnung der sich aus dem Oberbegriff des Anspruchs 1 ergebenden Gattung. Aufgabe der Erfindung ist es, eine derartige Wischeranordnung zu vereinfachen und die Zahl der benötigten Bauelemente herabzusetzen.

Die Aufgabe wird durch die sich aus dem kennzeichnenden Teil des Anspruchs 1 ergebende Merkmalskombination gelöst. Die Erfindung besteht im Prinzip also darin, den der Wischerwelle zugeordneten Abschnitt des Wischerarms nicht in einen nur schwenkbaren und einen schwenk- und drehbaren Teil aufzuteilen, sondern den gesamten Wischerarm nicht nur zu schwenken, sondern auch senkrecht zur Schwenkbewegung drehbar auszugestalten.

Dadurch, daß ein Kugelring auf der Wischerwelle befestigt ist, dessen kugelige Außenfläche von einer Steuerhülse umfaßt wird, ergibt sich eine verhältnismäßig große gemeinsame Lagerfläche, die relativ hohen Belastungen standhalten kann. Außerdem wird durch die Geometrie dieser kugeligen Lagerfläche eine sehr gute Führung des Wischarms erreicht, der mit der Steuerhülse verbunden ist.

Wenn der Wischerarm gemäß Anspruch 2 mittels zweier auf der Längsachse des Wischerarms angeordneter Gelenkzapfen, welche die Steuerhülse radial durchdringen, mit dem Kugelring verbunden ist, wird eine sehr sichere Verbindung zwischen Wischerwelle und Wischerarm hergestellt, und es können über diese Verbindung recht hohe Drehmomente in der Schwenkebene des Wischerarms eingeleitet werden. Wenn dabei gemäß Anspruch 3 jeweils ein Ende eines Gelenkstiftes in einer axialen Ausnehmung des Wischerarmes und das andere Ende in einer radialen Ausnehmung des Kugelrings angeordnet ist, ist außerdem ein recht einfacher Zusammenbau dieser Einzelteile möglich.

Um den Hebelweg zum Aufbringen der für die Drehbewegung um die Längsachse des Wischerarmes benötigten Kraft zu vergrößern, empfiehlt sich in Weiterbildung der Erfindung die Merkmalskombination nach Anspruch 4. Die Steuerscheibe kann dabei in geeigneter Entfernung von der Längsachse des Wischerarms angeordnet werden und die Steuerscheibe wird in einfachster Weise mit der Lagerhülse der Wischerwelle vereint, so daß dieses Bauelement gleichzeitig mehrere aufgaben erfüllt. Dabei kann der Rand je nach gewünschtem Abstand zur Drehachse des Wischerarms an geeigneter Stelle die Lagerhülse umlaufen.

Bei Anwendung einer vorteilhaften Ausgestaltung gemäß Anspruch 5 ergibt sich der Vorteil, daß bei Verwendung einheitlich ausgebildeter Wischerlager durch entsprechende Ausgestaltung der Steuerhülse, insbesondere deren der Steuerscheibe zugeordneten Innenfläche, die Charakteristik der pendelnden Drehbewegung des Wischerarmes um seine Längsachse der Krümmung der zu wischende Scheibe angepaßt werden kann.

Ein Ausführungsbeispiel der Erfindung wird nachfolgend anhand der Zeichnung erläutert.

Dabei zeigt
- Fig. 1: ausschnittsweise eine Ausführungsform der Erfindung und
- Fig. 2: in geschnittener Darstellung eine andere Ansicht des Ausführungsbeispiels nach Fig. 1.

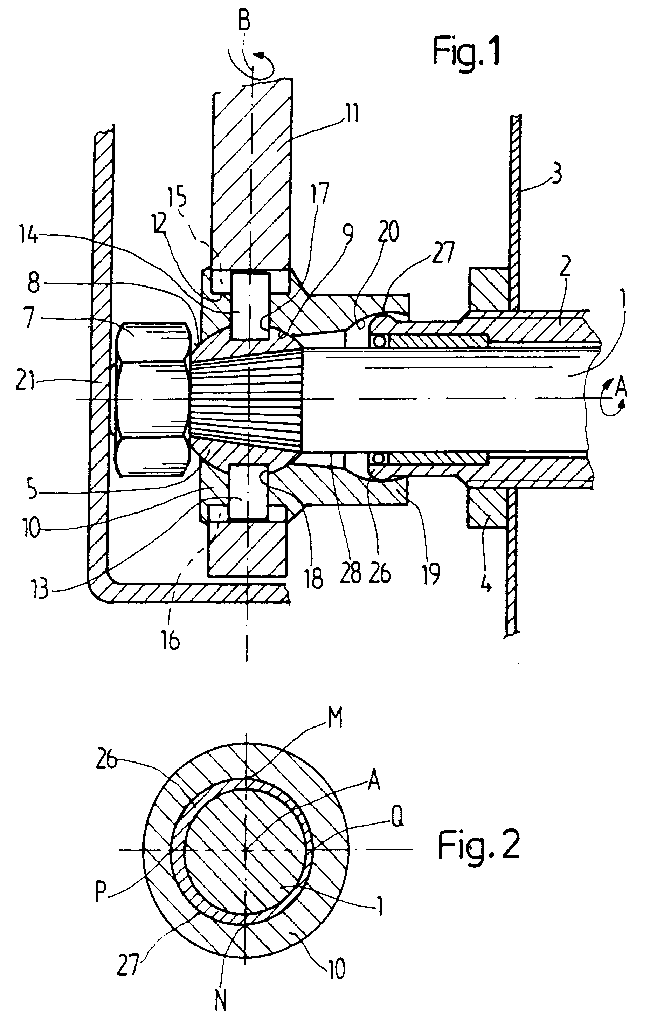

Fig. 1 zeigt eine Wischerwelle 1, die sich in pendelnder Bewegung um eine Wellenachse A dreht. Die Wischerwelle 1 ist gelagert in einer Lagerhülse 2, die mit einem Chassisblech 3 mittels der Mutter 4 verschraubt ist und damit gegenüber dem Chassisblech 3 fixiert ist. Auf die Wischerwelle 1 ist ein Kugelring 5 aufgesteckt und durch eine Keilverzahnung auf der Wischerwelle 1 und durch Verschraubung mittels der Mutter 7 gegenüber der Wischerwelle 1 lösbar fixiert. Die kugelige Fläche 8 des Kugelrings 5 wird umfaßt von einer entsprechenden konkaven Innenfläche 9 einer Steuerhülse 10, die das wischerseitige Ende eines Wischerarms 11 aufnimmt. Der Wischerarm 11 besitzt eine Aufnahmebohrung 12, die die äußere Mantelfläche der Steuerhülse 10 umfaßt. Mittels zweier die Aufnahmehülse 10 radial durchstoßender Gelenkzapfen 13, 14, die in geeignete axiale Ausnehmungen 15, 16 bzw. 17, 18 des Wischerarms 11 (an die Aufnahmebohrung 12 angrenzend) bzw. der kugeligen Fläche 8 des Kugelrings 5 ragen, ist der Wischerarm 11 gegenüber dem Kugelring 5 und damit der Wischerwelle 1 gegen ein Verdrehen um die Wellenachse A gesichert. Hierdurch folgt der Wischerarm 11 in Drehrichtung der Wellenachse A der pendelnden Schwenkbewegung der Wischerwelle 1.

Gleichzeitig erlaubt aber die Zapfenbefestigung noch ein Verdrehen des Wischerarms 11 gegenüber dem Kugelring 5 und damit der Wischerwelle 1 um die Längsachse B des Wischerarms 11. Die Konstruktion ist dabei so getroffen, daß unter der Wirkung der Gelenkzapfen 13, 14 bei einem Schwenken des Wischerarms 11 um seine Längsachse B die Steuerhülse 10 gleichzeitig mit um diese Längsachse B geschwenkt wird. Es ist somit festzuhalten, daß die Steuerhülse 10 in Verbindung mit dem Wischerarm 11 eine gemeinsame begrenzte Drehbewegung um die Längsachse B des Wischerarmes 11 ausführen kann. Das bedeutet umgekehrt, daß eine Drehbewegung der Steuerhülse 10 um die Längsachse B gleichzeitig zu einer entsprechenden Drehbewegung des Wischerarms 11 führt. Diese begrenzte Drehbewegung wird durch eine Steuerscheibe 26 mit einer Steuerkurve 27 bewirkt. Die Steuerscheibe 26 wird von einem am oberen Ende der Lagerhülse 2 radial abstehenden Rand gebildet, dessen Außenkontur als Steuerkurve 27 ausgebildet ist. Die Steuerkurve 27 ist gegenüber dem kreisförmigen Umfang 28 der Wischerwelle 1 exzentrisch. In der Zeichnung ist der Schnitt so gewählt, daß der jeweils sichtbare Schnittpunkt der Steuerkurve 27 mit der Zeichenebene gleichweit von der Wellenachse A entfernt ist. In Fig. 2 sind das die beiden Punkte M und N. Aus Fig. 2 ist aber zu ersehen, daß die entsprechenden Schnittpunkte P, Q bei einem Schnitt senkrecht zur Betrachterebene längs der Wellenachse A jeweils einen unterschiedlichen Abstand zur Wellenachse A haben. Das bedeutet, daß bei einer Drehbewegung der Steuerhülse 10 zusammen mit der Wischerwelle 1 um die Wellenachse A das offene Ende 19 der Steuerhülse 10 gleichzeitig um einen kleinen Winkelbereich um die Längsachse B des Wischerarmes 11 in pendelnder Bewegung gedreht wird.

Damit wirkt die Innenfläche des offenen Endes 19 der Steuerhülse 10 in Verbindung mit der Steuerkurve 27 als Steuerkulisse zur Erzeugung der Drehbewegung der Steuerhülse 10 und damit des Wischerarmes 11 um dessen Längsachse B. Selbstverständlich läßt sich die Steuerkulisse auch so ausführen, daß der Wischerarm 11 eine weniger stetig von der Schwenkbewegung der Wischerwelle 1 abhängende Drehbewegung durchführt. Hierzu muß nur die Kontur der Steuerkurve 27 entsprechend abgeändert werden. Eine andere vorteilhafte Möglichkeit besteht darin, die Außenkontur der Steuerscheibe 26 bzw. des radial abstehenden Randes der Lagerhülse 2 gegenüber der Schwenkachse A zentrisch auszuführen und dagegen die zugeordnete Innenfläche 20 am offenen Ende 19 der Steuerhülse 10 derart exakt zentrisch auszugestalten, daß die Steuerhülse 10 in Abhängigkeit von der Schwenklage der Wischerwelle 1 die gewünschte Drehlage erhält. Der Vorteil liegt insbeondere darin, daß durch entsprechend ausgestaltete Steuerhülsen 10 eine ansonsten unveränderte Wischeranordnung leicht an die Krümmung des jeweiligen Scheibentyps angepaßt werden kann, ohne daß ansonsten der Aufbau der Wischerwelle 1 und der ortsfesten Lagerhülse 2 geändert werden müßte.

Die Erfindung birgt weiterhin den Vorteil, daß Wischerarm 11, Steuerhülse 10 und Kugelring 5 vorgefertigt und miteinander zu einer Einheit vereint gelagert und behandelt werden können, wodurch sich die ansonsten gleiche Wischanlage einfach an die verschiedenen Scheibentypen anpassen läßt.

Zum Schutz der Wischeranlage gegen Verschmutzung und vor einer Verletzung der Bedienungsperson durch sonst offenliegende scharfe Kanten ist üblicherweise auf den Wischerarm eine Schutzkappe 21 aufgesteckt, die mit dieser sowohl die Schwenkals auch die Drehbewegung durchführt.

## Patentansprüche

1. Wischeranordnung mit einem Wischerarm (11), dessen pendelnde Drehbewegung um die Wellenachse (A) der Wischerwelle (1) von einer pendelnden Drehbewegung um seine eigene Längsachse (B) überlagert ist, die in Abhängigkeit vom Schwenkwinkel des Wischerarmes(11) um die Wellenachse (A) gesteuert ist, und dessen Drehbewegung um die Längsachse (B) des Wischerarmes (11) durch Abfahren der Steuerkurve einer gegenüber dem Chassisblech (3) fixierten Steuerscheibe (26) mit einem Steuerteil in den Wischerarm (11) eingeleitet wird, wobei das Steuerteil mit dem Wischerarm (11) verbunden ist, **dadurch gekennzeichnet**, daß ein Kugelring (5) an der Wischerwelle (1) befestigt ist, dessen kugelige Fläche (8) von einer gleichzeitig mit dem Wischerarm (11) um die Längsachse (B) des Wischerarmes (11) verschwenkbaren Steuerhülse (10) umfaßt wird, wobei sich die Steuerhülse (10) an der Steuerscheibe (26) mit Steuerkurve (27) mit einer quer zur Wellenachse (A) und quer zur Längsachse (B) des Wischerarmes (11) gerichteten Kraft abstützt.

2. Wischeranordnung nach Anspruch 1, **dadurch gekennzeichnet**, daß der Wischerarm (11) mittels zwei auf der Längsachse (B) des Wischerarms (11) angeordneten Gelenkzapfen (13, 14) welche die Steuerhülse (10) radial durchdringen, mit dem Kugelring (5) verbunden ist.

3. Wischeranordnung nach Anspruch 2, **dadurch gekennzeichnet**, daß die Gelenkzapfen (13, 14) jeweils mit einem Ende in einer axialen Ausnehmung (15, 16) des Wischerarmes (11) und mit dem anderen Ende in einer radialen Ausnehmung (17, 18) des Kugelringes (15) angeordnet sind.

4. Wischeranordnung nach einem der vorhergehenden Ansprüche, **dadurch gekennzeichnet**, daß die Steuerscheibe (26) mit Steuerkurve (27) von einem um die Lagerhülse (2) für die Wischerwelle (1) umlaufenden, radial abstehenden Rand gebildet ist.

5. Wischeranordnung nach einem der vorhergehenden Ansprüche, **dadurch gekennzeichnet**, daß die Außenkontur der Steuerscheibe (26) kreisrund und konzentrisch zu der Wellenachse (A) ausgebildet ist und die der Steuerscheibe (26) zugeordnete Innenfläche (20) der Steuerhülse (10) derart exzentrisch ausgebildet ist, daß sie die Funktion der Steuerkurve erfüllt.

## Claims

1. A wiper arrangement, comprising a wiper arm (11) in which the oscillating pivotal movement about the spindle axis (A) of the wiper spindle (1) is superimposed by an oscillating pivotal movement around its own longitudinal axis (B), which is controlled depending upon the pivotal angle of the wiper arm (11) about the spindle axis (A), and whose pivotal movement about the longitudinal axis (B) of the wiper arm (11) is introduced into the wiper arm (11) by travelling along the control curve with a control part of a control disk (26), said control curve is fixed with respect to the chassis plate (3), said control part is connected to the wiper arm (11), **characterized in that** a spherical ring (5) is arranged at the wiper spindle (1), the spherical surface (8) of which is embraced by a control sleeve (10) which can be pivoted about the longitudinal axis (B) of the wiper arm (11) simultaneously with the wiper arm (11), whereby the control spindle (10) is supported at said control disk (26) with said control curvature (27) by a force which is directed in a direction transverse to the spindle axis (A) and in a direction transverse to the longitudinal axis (B) of the wiper arm (11).

2. Wiper arrangement according to claim 1, characterized in that the wiper arm (11) is linked to the spherical ring (5) by virtue of two journals (13, 14) which radially protrude the control sleeve (10) and which are disposed in the longitudinal axis (B) of the wiper arm (11).

3. Wiper arrangement according to claim 2, characterized in that the journals (13, 14) are accommodated with one end in the axial recess (15, 16) of said wiper arm (11) and with the other end in the radial recess (17, 18) of said spherical ring (5), respectively.

4. Wiper arrangement according to one of the preceding claims, characterized in that said control disk (26) with control curvature (27) is formed by a radially extending edge, which runs around the bearing sleeve (2) of said wiper spindle (1).

5. Wiper arrangement according to one of the preceding claims, characterized in that the outer contour of the control disk (26) is circularly-shaped and embodied concentrically to the spindle axis (A) and in that the inner surface (20) of the control sleeve (10) which is associated to the control disk (26) is embodied eccentrically such that it fulfils the function of the control curve.

## Revendications

1. Dispositif d'essuie-glace comportant un bras d'essuie-glace (11) au mouvement de pivotement pendulaire duquel, qui s'effectue autour de l'axe (A) de l'arbre d'essuie-glace (1), est superposé un mouvement de rotation pendulaire qui est exécuté autour du propre axe longitudinal (B) du bras d'essuie-glace et est commandé en fonction de l'angle de pivotement du bras d'essuie-glace (11) autour de l'axe (A) de l'arbre, et dont le mouvement de rotation autour de l'axe longitudinal (B) du bras est déclenché, sous l'effet du franchissement de la came de commande d'un disque de commande (26) fixé par rapport à la tôle (3) du châssis, par une partie de commande du bras d'essuie-glace (11), la partie de commande étant reliée au bras d'essuie-glace (11), caractérisé en ce qu'à l'arbre d'essuie-glace (1) est fixée une bague sphérique (5) dont la surface sphérique (8) est entourée par une douille de commande (10) qui peut pivoter en même temps que l'arbre d'essuie-glace (1) autour de l'axe longitudinal (B) du bras d'essuie-glace (11), la douille de commande (10) prenant appui sur le disque de commande (26) au moyen de la came de commande (27), avec une force dirigée transversalement par rapport à l'axe (A) de l'arbre et transversalement par rapport à l'axe longitudinal (B) du bras d'essuie-glace (11).

2. Dispositif d'essuie-glace selon la revendication 1, caractérisé en ce que le bras d'essuie-glace (11) est relié à la bague sphérique (5) à l'aide de deux tétons d'articulation (13, 14) qui sont disposés sur l'axe longitudinal (A) du bras d'essuie-glace (11) et qui traversent radialement la douille de commande (10).

3. Dispositif d'essuie-glace selon la revendication 2, caractérisé en ce que les tétons d'articulation (13, 14) sont disposés respectivement par une extrémité dans un évidement axial (15, 16) du bras d'essuie-glace (11) et par l'autre extrémité dans un évidement radial (17, 18) de la bague sphérique (5).

4. Dispositif d'essuie-glace selon l'une des revendications précédentes, caractérisé en ce que le disque de commande (26) équipé de la came de commande (27) est formé par un bord qui fait saillie radialement et s'étend circonférentiellement autour du coussinet de palier (2) pour l'arbre d'essuie-glace (1).

5. Dispositif d'essuie-glace selon l'une des revendication précédentes, caractérisé en ce que le contour extérieur du disque de commande (26) possède une forme circulaire et est concentrique à l'axe (A) de l'arbre, et que la surface intérieure (20) qui est associée au disque de commande (26), de la douille de commande (10) est agencée d'une manière excentrée, de telle sorte qu'elle assume le rôle de la came de commande.
